(19) Europäisches Patentamt
European Patent Office
Office européen des brevets

(11) **EP 2 172 820 A1**

(12) **EUROPÄISCHE PATENTANMELDUNG**

(43) Veröffentlichungstag:
**07.04.2010 Patentblatt 2010/14**

(51) Int Cl.:
***G05B 19/418*** *(2006.01)*

(21) Anmeldenummer: **08017481.6**

(22) Anmeldetag: **06.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **BASF SE**
**67056 Ludwigshafen (DE)**

(72) Erfinder:
- **Münnemann, Ansgar, Dr.-Ing.**
  **67578 Gimbsheim (DE)**
- **Martinez, Nuria Pascual**
  **68161 Mannheim (DE)**
- **Schlichtmann, Tobias**
  **67067 Ludwigshafen (DE)**

(74) Vertreter: **Hössle, Markus**
**Hössle Kudlek & Partner**
**Postfach 10 23 38**
**70019 Stuttgart (DE)**

(54) **Verfahren und System zur automatisierten Analyse von Prozessdaten**

(57) Die vorliegende Erfindung betrifft die automatisierte Analyse von aus einer Reihe von Prozesssignalen bestehenden Prozessdaten (50) durch Identifikation einer Prozessdatensequenz mit einem Zeitreihenmuster, das mit demjenigen einer Referenzdatensequenz (52, Q) ähnlich ist, mit den Schritten:
- Durchführen einer Sequenzsuche und Ermitteln einer ähnlichen Prozessdatensequenz (C) durch Vergleich mit mindestens einer Referenzdatensequenz (52, Q),
- Bewerten der Ähnlichkeit zwischen der ermittelten Prozessdatensequenz (C) und der Referenzdatensequenz (52) durch Minimieren des Abstands zwischen den Signalen der Prozessdatensequenz (C) und der Referenzdatensequenz (52) durch Anpassung der Prozessdatensequenz (C) unter Berücksichtigung linearer und nichtlinearer Zeitachsen, Berechnen des Distanzmaßes zwischen der Prozessdatensequenz und der Referenzdatensequenz und Zuordnen von Abstandsklassifikatoren zu den berechneten Distanzmaßen als Ähnlichkeitsmaßstab mittels einer Schwellwertunterscheidung und Einstufen der Prozessdatensequenz als ähnlich oder unähnlich,
- Ausgeben der Ähnlichkeitsbewertung über eine Benutzerschnittstelle.

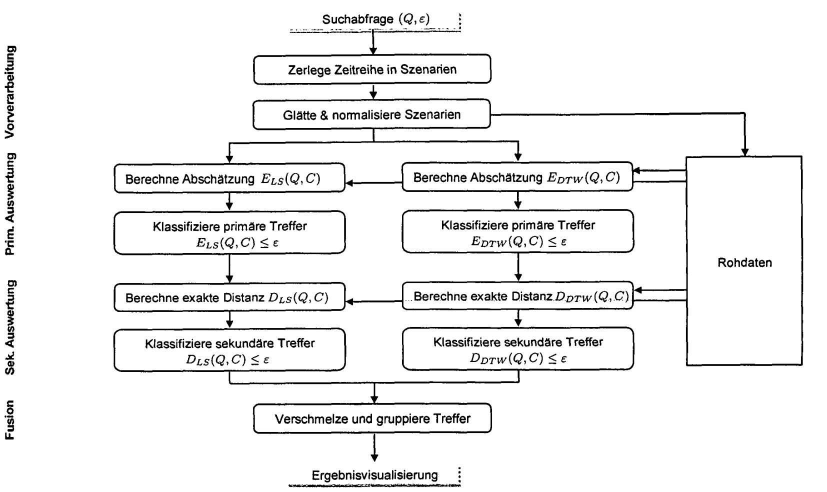


Fig. 12

EP 2 172 820 A1

## Beschreibung

### Technisches Gebiet

Die vorliegende Erfindung betrifft ein Verfahren und ein System zur automatisierten Analyse von Prozessdaten. Insbesondere betrifft die Erfindung ein Werkzeug zur automatisierten Suche ähnlicher Zeitreihenmuster eines laufenden Prozesses in historisierten (Referenz-)Prozessdaten.

### Beschreibung des Standes der Technik

Aus der DE 10 2007 046 964 A1 ist ein Prozesssteuersystem bekannt, das das Sammeln und die Analyse von Prozesssteuerdaten integriert, die für die Durchführung gewisser, mit hohem Rechenaufwand verbundener Prozesssteuerfunktionen benutzt werden, wie zum Beispiel adaptive Modellerzeugung und Erzeugung von Abgleichparametern. Die Integration erfolgt in der gleichen Steuereinrichtung, in der eine oder mehrere der Prozesssteuerroutinen implementiert sind. Das bekannte System ersetzt einen Ansatz mit dem Schichtsystem mit mehreren Verarbeitungsvorrichtungen durch die Integration eines analytischen Servers, der rechenaufwendige Analysen durchführt, die von einer oder mehreren Steuerroutinen direkt in der Echtzeit-Steuervorrichtung benutzt werden, in der sich eine oder mehrere Steuerroutinen befinden.

### Zusammenfassung der Erfindung

Erfindungsgemäß werden ein Verfahren gemäß Anspruch 1 und ein System gemäß Anspruch 9 vorgeschlagen.

Die Erfindung ermöglicht eine automatisierte Analyse von Prozessdaten durch Identifikation einer Prozessdatensequenz mit einem Zeitreihenmuster, das mit demjenigen einer Referenzdatensequenz ähnlich ist, wobei die Prozessdaten aus einer Reihe von Prozesssignalen bestehen, die bspw. in einem Herstellungsprozess, einem Laborprozess, einem Industrieprozess, einem Bearbeitungsprozess u.dgl. gewonnen wurden. Die Prozessdatengewinnung kann in jedem herstellenden, verarbeitenden, bearbeitenden usw. Industriezweig wie bspw. der Chemie, der Pharmazie, der Werkstoffherstellung und -ver/bearbeitung usw. erfolgen. In der Regel erfolgt die Prozessdatenerhebung bzw. -gewinnung mittels geeigneter Prozess- oder Feldsensoren.

Die Erfindung umfasst das Durchführen einer Sequenzsuche und Ermitteln einer ähnlichen Prozessdatensequenz durch Vergleich mit einer Referenzdatensequenz. Bei der Sequenzsuche kann es sich bspw. um eine sogenannte Teilsequenzsuche handeln, bei der ein Auswertungsfenster (mit einer (vorgegebenen oder vorgebbaren) Zeitbreite) definiert wird, mit dem eine sogenannte Suchzeitreihe auf der Suche nach ähnlichen Prozessdatensequenz überstrichen wird. Das Überstreichen kann in (vorgegebenen oder vorgebbaren) zeitlichen Abständen auf der Zeitachse (also diskontinuierlich) oder kontinuierlich, d.h. in Abständen des kleinsten Zeitmaßes, erfolgen. Dadurch wird die Prozessdatensequenz in sogenannte Teilsequenzen zerlegt, die dann individuell mit dem Referenzmuster verglichen werden. Die Erfindung kann sich somit dem Prinzip der Teilsequenzsuche bedienen, die zunächst unabhängig für jede in dem Referenzmuster eingeschlossene Zeitreihe, d.h. in der Referenzdatensequenz vorhandenen Untersequenz, durchgeführt wird.

Um die Erkennung ähnlicher Zeitreihenmuster invariant gegenüber Gleichanteil- und Verstärkungsschwankungen zwischen den einzelnen Teilsequenzen zu gestalten, können ggf. die aus der Suchzeitreihe extrahierten Prozessdatensequenz bzw. Teilsequenzen um ihr arithmetisches Mittel bereinigt und auf die Standardabweichung $\sigma = 1$ normiert werden. Durch Medianfilterung können bspw. Impulssignale o.ä. eliminiert und/oder Rauschen unterdrückt werden. Diese Maßnahmen sind dazu geeignet, eine optimierte Erkennungsgüte zu erzielen.

Die Bewertung der Ähnlichkeit zwischen der ermittelten Prozessdatensequenz und der Referenzdatensequenz erfolgt durch Minimieren des Abstands zwischen den Signalen der Prozessdatensequenz und der Referenzdatensequenz durch Anpassen der Prozessdatensequenz unter Berücksichtigung linearer und nichtlinearer Zeitachsen.

Unter "Anpassen" ist hierbei jegliche Art von mathematischer Stauchung und Streckung zu verstehen, und zwar sowohl unter Anwendung linearer Rechenkonzepte als auch nichtlinearer Rechenkonzepte. Der Fachmann kennt hierzu bspw. das Prinzip der Dynamischen Zeitverzerrung (engl: Dynamic Time Warping) und das Prinzip der Linearen Skalierung (engl.: Linear Scaling).

Die Berechnung des Distanzmaßes der Linearen Skalierung erlaubt die Berücksichtigung linearer zeitlicher Deformationen im Sinne von Streckungen oder Stauchungen zwischen dem zu untersuchenden Zeitreihenmuster und dem Referenzmuster. Die Definition des maximalen Skalierungsfaktors im Rahmen der Linearen Skalierung erlaubt die benutzerseitige Parametrierung der maximalen zeitlichen Toleranz hinsichtlich linearer zeitlicher Verzerrungen.

Im Gegensatz dazu ermöglicht die Berechnung des Distanzmaßes der Dynamischen Verzerrung die Berücksichtigung nichtlinearer zeitlicher Deformation im Rahmen der Ähnlichkeitserkennung durch den Einsatz flexibler nichtlinearer Zeitachsen. Dazu wird eine Verzerrungsfunktion berechnet, die die optimale Zuordnung der einzelnen Segmente des Zeitreihenmusters zu dem Referenzmuster angibt, so dass der Abstand zwischen den beiden Mustern minimiert wird. Die Beschränkung des Verzerrungspfads mittels eines Sacoe-Chiba-Bands flexibler Breite erlaubt die benutzerseitige Parametrierung der maximalen zeitlichen Toleranz hinsichtlich nichtlinearer zeitlicher Deformationen. Somit besitzen beide Auswertungsverfahren einen parametrierbaren zeitlichen Freiheitsgrad, so dass der Suchalgorithmus auf die Toleranzanforderungen des Einsatzbereichs sowie das Ähnlichkeitsempfinden des Anwenders angepasst werden kann.

Es wurde gefunden, dass der kombinierte Einsatz einer linearen und einer nichtlinearen Methode die Nachbildung der menschlichen Abstraktionsfähigkeit hinsichtlich zeitlicher Deformationen im Rahmen der Ähnlichkeitserkennung und somit eine Optimierung einer automatisierten Ähnlichkeitsanalyse ermöglicht.

Nach dem Berechnen des Distanzmaßes zwischen der Prozessdatensequenz und der Referenzdatensequenz erfolgt ein Zuordnen von Abstandsklassifikatoren zu den berechneten Distanzmaßen als Ähnlichkeitsmaßstab mittels einer Schwellwertunterscheidung und Einstufen der Prozessdatensequenz als ähnlich oder unähnlich. In der Abstandsklassifikation wird somit über die Einstufung des zu untersuchenden Zeitreihenmusters als ähnlich oder verschieden hinsichtlich des definierten Referenzmusters entschieden. Bei der Schwellwertunterscheidung gibt die Höhe der Abstandsschwelle die maximal zu tolerierenden abtastwertbezogenen Ausprägungsunterschiede der zu untersuchenden Zeitreihenmuster gegenüber dem Referenzmuster an, so dass der Benutzer durch Variation dieses Schwellwerts Einfluss auf die noch als ähnlich einzustufenden Abweichungen nehmen kann.

Beispielsweise können die Distanzmaße für die lineare Anpassung und die nichtlineare Anpassung getrennt, bspw. parallel, berechnet werden. In diesem Falle kann die Schwellwertunterscheidung derart durchgeführt werden, dass das betrachtete Zeitreihenmuster dann als ähnlich eingestuft wird, sobald eines der beiden berechneten Distanzmerkmale die vordefinierte Abstandsschwelle unterschreitet. Alternativ kann eine Ähnlichkeitseinstufung dann erfolgen, wenn beide berechneten Distanzmerkmale die vordefinierte Abstandsschwelle unterschreiten.

Die Distanzmaßberechnung kann auch durch Verschachtelung eines linearen und eines nichtlinearen Anpassungsverfahrens durchgeführt werden. Dazu wird zunächst eines der beiden Verfahren durchgeführt, um daran anschließend das entsprechend andere Verfahren auf das erhaltene Ergebnis anzuwenden.

Um den numerischen Aufwand der Ähnlichkeitsbewertung zu reduzieren, kann im Rahmen der Erfindung eine Indizierungstechnik verwendet werden, bei der es sich bspw. um das an sich bekannte GEMINI-Framework handeln kann. Dazu wird zunächst eine dimensionsreduzierte Repräsentation jedes der zu untersuchenden Zeitreihenmuster mittels des Prinzips der abschnittsweise konstanten Approximation generiert. Dazu wird ein Zeitreihenmuster in gleich große Abschnitte zerlegt und jeweils die Mittelwerte der sich innerhalb der einzelnen Abschnitte befindlichen Abtastwerte berechnet. Die die Reihenfolge berücksichtigende Aneinanderreihung dieser Mittelwerte stellt dann eine dimensionsreduzierte Approximation des Zeitreihenmusters dar.

Dieses Vorgehen erlaubt eine indexbasierte Abschätzung der genannten Distanzmerkmale, so dass bereits durch eine Vorklassifikation auf Basis dieser Abschätzung eine Aussage über die Ähnlichkeit der zu untersuchenden Zeitreihenmuster getroffen werden kann und lediglich die in dieser Stufe als ähnlich ausgewiesenen Treffer einer exakten Auswertung mittels der Linearen Skalierung und der Dynamischen Zeitverzerrung zugeführt werden müssen. Alternativ sind selbstverständlich beliebige andere, dem Fachmann bekannte Abschätzungsmethoden möglich, insbesondere eine direkt auf die Rohdaten zurückgreifende rohdatenbasierte Abschätzung.

Schließlich erfolgt eine Ausgabe des Ergebnisses der Ähnlichkeitsbewertung über eine Benutzerschnittstelle. Dabei kann es sich um eine grafische Benutzerschnittstelle handeln, und die Ausgabe kann eine grafische Aufbereitung der entsprechenden Ausschnittspositionen der als ähnlich eingestuften Zeitreihenmuster sowie deren Länge sein.

Die Umsetzung der Erfindung erfolgt auf einem System zur automatisierten Analyse von aus einer Reihe von Prozesssignalen bestehenden Prozessdaten. Das System umfasst ein Betriebsdateninformationssystem und mindestens einen mit dem Betriebsdateninformationssystem verbundenen Hostrechner mit einer Benutzerschnittstelle. Das Betriebsdateninformationssystem wiederum umfasst einen Speicher zum Speichern von Prozesssignalen bzw. -daten sowie eine Mehrzahl von Erfassungseinrichtungen zum Erfassen von Prozessdaten. Der mindestens eine Hostrechner umfasst ein Datenakquisitionsmodul zur Akquise und Vorverarbeitung von Prozessdaten, die in dem Betriebsdateninformationssystem archiviert bzw. gespeichert sind, und von Referenzprozessdaten, die in einem dem mindestens einen Hostrechner zugeordneten Referenzdatenspeicher archiviert bzw. gespeichert sind. Des weiteren umfasst der mindestens eine Hostrechner eine grafische Benutzerschnittstelle sowie ein Analysemodul zur Ausführung des erfindungsgemäßen Verfahrens, d.h. das Analysemodul ist softwaretechnisch derart eingerichtet und ausgebildet, dass es ein wie voranstehend beschriebenes (und nachstehend noch ausführlicher zu beschreibendes) erfindungsgemäßes Verfahren ausführen kann.

Die vorliegende Beschreibung deckt auch ein Computerprogramm mit Programmcode ab, der dazu geeignet ist, ein erfindungsgemäßes Verfahren auszuführen, wenn das Computerprogramm auf einer entsprechenden Recheneinrichtung, insbesondere auf einem System zur automatisierten Analyse von aus einer Reihe von Prozesssignalen bestehenden Prozessdaten, abläuft. Bspw. kann das Computerprogramm auf einem Hostrechner ablaufen, der mit einem voranstehend beschriebenen Betriebsdateninformationssystem verbunden ist. Es werden sowohl das Computerprogramm selbst als auch abgespeichert auf einem computerlesbaren Medium (Computerprogrammprodukt) beansprucht.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

## Kurzbeschreibung der Zeichnung

Figur 1 zeigt eine schematische Blockbilddarstellung eines erfindungsgemäßen Systems zur automatisierten Analyse von Prozessdaten.

Figur 2 zeigt ein Diagramm mit einer beispielhaften Suchzeitreihe zur Veranschaulichung der Funktionsweise des gleitenden Auswertungsfensters.

Figur 3 zeigt ein Diagramm mit einer Referenzdatensequenz und einem Kandidaten für eine ähnliche Prozessdatensequenz zur Erläuterung der Funktionsweise der Linearen Skalierung.

Figur 4 zeigt das Diagramm der Figur 3 nach Anwendung einer Linearen Skalierung zur Berechnung des Distanzmaßes.

Figur 5 zeigt Abschätzungshüllkurven aller Skalierungs-Versionen für das Beispiel der Figur 3.

Figur 6 zeigt eine aus der Figur 5 resultierende hüllkurvenbasierte Abschätzung.

Figur 7 zeigt ein Flussdiagramm eines erfindungsgemäßen Ablaufs einer Linearen Skalierung zur Szenarienerkennung.

Figur 8 zeigt eine Verzerrungsmatrix zur Durchführung einer Dynamischen Zeitverzerrung für das Diagramm der Figur 4.

Figur 9 zeigt auf der Basis der Dynamischen Verzerrung der Figur 8 erzeugte Referenzhüllkurven.

Figur 10 zeigt das Ergebnis der hüllkurvenbasierten Abschätzung der Figur 9.

Figur 11 zeigt ein Flussdiagramm eines erfindungsgemäßen Ablaufs einer Dynamischen Zeitverzerrung zur Szenarienerkennung.

Figur 12 zeigt ein Flussdiagramm zur Veranschaulichung eines erfindungsgemäßen Verfahrens zur automatisierten Analyse von Prozessdaten mit einer rohdatenbasierten Abschätzung.

Figur 13 zeigt ein Flussdiagramm zur Veranschaulichung eines erfindungsgemäßen Verfahrens zur automatisierten Analyse von Prozessdaten mit einer indexbasierten Abschätzung.

## Ausführliche Beschreibung

Figur 1 zeigt eine schematische Darstellung eines erfindungsgemäßen Systems 10 zur automatisierten Analyse von Prozessdaten, das im folgenden der Einfachheit halber als Analysesystem 10 bezeichnet wird.

Das Analysesystem 10 umfasst ein Betriebsdateninformationssystem 12, eine Mehrzahl von Hostrechnern 14, 14' (von denen der Einfachheit halber lediglich zwei Rechner dargestellt sind) sowie einen Speicher 34 zum Speichern bzw. Archivieren von Referenzprozessdaten (Referenzdatenspeicher), der dem mindestens einen Hostrechner 14, 14' zugeordnet ist.

Das Betriebsdateninformationssystem 12 umfasst eine Vielzahl von Erfassungseinrichtungen 16, 18, die mit einem Messserver 20 verbunden sind, der über eine Prozessdatensoftware verfügt, mittels der die Erfassung von Prozessdaten gesteuert und eine Vorverarbeitung vorgenommen wird. Eine Speicherung erfasster Prozessdaten erfolgt in einem Speicher 22 des Messservers 20. Der Messserver 20 ist derart ausgestaltet, dass sowohl analoge Erfassungseinrichtungen 16 (über analoge Leitungen 17) als auch digitale Erfassungseinrichtungen 18 (über eine Busleitung 19) angeschlossen werden können. Bei den Erfassungseinrichtungen handelt es sich um an sich bekannte und im Markt erhältliche Einrichtungen wie bspw. Sensoren (Messfühler, Thermometer, Druckmesser, Durchflussmesser, Füllstandmesser usw.).

Das Betriebsdateninformationssystem 12 ist mit dem Hostrechner 14, 14' in geeigneter Weise, beispielsweise über ein LAN (z.B. auf Ethernet-Basis mit TCP/IP-Protokoll) verbunden. Der Speicher 34 ist ebenfalls in dieses Netzwerk eingebunden. Der Speicher 34 kann von den Arbeitsplätzen der Hostrechner 14, 14' getrennt oder als Teil eines oder aller Hostrechner ausgebildet sein.

Die Hostrechner 14, 14' umfassen jeweils übliche Eingabe-/Ausgabe-Einrichtungen wie Bildschirme bzw. Monitore 24 und Tastaturen 26 sowie eigene Recheneinheiten 28, die wiederum die notwendigen Programmmodule zur Ausführung eines erfindungsgemäßen Verfahrens aufweisen, insbesondere ein Datenakquisitionsmodul 30 und ein Analysemodul 32.

Die Anbindung der Prozessdaten an die grafische Benutzerschnittstelle (zur Ausgabe und Visualisierung von Ergebnissen sowie zur Kommunikation mit dem Benutzer über den Monitor 24) sowie die Weiterleitung an das Analysemodul 32 erfolgt online mittels dem Betriebsdateninformationssystem 12 und einem übergreifenden Datenakquisitionsmodul 30. Dieses ermöglicht die Akquisition der Prozessdaten der in dem Betriebsdateninformationssystem 12 historisierten Messstellen unabhängig von der verwendeten Systemplattform (bspw. Osisoft PI oder Aspentech InfoPlus. 21).

Die Gesamtstruktur der Szenariensuchapplikation setzt sich somit aus drei Hauptkomponenten zusammen. Ein zentraler Bestandteil ist dabei die grafische Benutzerschnittstelle, die die Benutzerinteraktionselemente bereitstellt und die im Hintergrund auf der Recheneinheit 28 des mindestens einen Hostrechners 14, 14' wirkenden Programmmodule 30, 32 koordiniert.

Das Datenakquisitionsmodul 30 nimmt Datenabfragen in Form einer oder mehrerer Messstellen, einem Akquisitionszeitraum sowie einer Abtastrate von dem Betriebsdateninformationssystem 12 entgegen und liefert die entsprechenden Zeitreihen an die Benutzerschnittstelle zurück. Hier können die akquirierten Daten über dem Monitor 24 gesichtet und eine Suchabfrage formuliert werden.

Diese Suchabfrage sowie die relevanten Zeitreihen werden an das Analysemodul 32 weitergeleitet. Nachdem der Suchprozess abgeschlossen ist, werden die Trefferintervalle, d.h. die Start- und Endzeitpunkte, der als ähnlich identifizierten Teilsequenzen an die Benutzerschnittstelle zur Ergebnisvisualisierung auf dem Monitor 24 zurückgeliefert.

Das Analysemodul 32 führt zunächst eine Ähnlichkeitssuche zwischen einer definierten Suchzeitreihe 50 von Prozessdaten und einem Referenzszenario 52 durch, um einen Kandidaten C zu identifizieren. Grundsätzlich lassen sich folgende Abfragearten im Rahmen der Ähnlichkeitssuche unterscheiden:

• Vollsequenzsuche: Gegeben sind $N$ Datensequenzen $C_1$, $C_2$, ..., $C_N$ bestehend aus reellen Zahlen und eine Abfragesequenz $Q$. Dabei besitzen alle Datensequenzen sowie die Abfragesequenz die gleiche Länge. Der Abfragealgorithmus sucht nun nach den Sequenzen, die einem zuvor definierten Ähnlichkeitsmaß $\varepsilon$ zwischen Kandidatensequenz $C_i$ ($1 \leq i \leq$ N) und Abfragesequenz $Q$ entsprechen.

• Teilsequenzsuche: Gegeben ist eine Datensequenz $R$, eine Abfragesequenz $Q$ sowie ein Ähnlichkeitsmaß $\varepsilon$. Der Abfragealgorithmus sucht nun innerhalb der Datensequenz $R$ nach Teilsequenzen $C_i$, die mit der Abfragesequenz gemäß dem definierten Ähnlichkeitsmaß $\varepsilon$ übereinstimmen. Als Rückgabewerte der Abfrage erwartet der Nutzer die Teilsequenzen $C_i$, die von dem Suchalgorithmus als Treffer eingestuft werden und somit eine Ähnlichkeit zu der Abfragesequenz $Q$ aufweisen sowie die Zeitpunkte ihres Auftretens innerhalb der Sequenz $R$.

Prinzipiell lässt sich jedes Problem der Teilsequenzsuche in ein Problem der Vollsequenzsuche überführen. Dazu ist es notwendig, die zu untersuchende Zeitreihe $R = (r_1,...,r_{mr})$ in Kandidatensequenzen $C_i$ zu zerlegen, deren Längen mit der der Abfragesequenz $|Q| = mq$ übereinstimmen, so dass implizit auch $mr \geq mq$ gilt.

Die Extraktion der Kandidatensequenzen $C_i$ aus dem eigentlichen Signalverlauf kann hierbei mittels eines sogenannten Auswertungsfensters 54 erzielt werden. Dieses wird schrittweise über den Signalverlauf der Suchzeitreihe 50 bewegt und zu jedem Abtastzeitpunkt wird eine entsprechende Kandidatensequenz ausgeschnitten (vgl. Figur 2, in der das Abtasten einer Füllstandmessreihe mittels eines Auswertungsfensters 54 veranschaulicht ist). Mathematisch entspricht das Ausschneiden eines Fensters aus dem Signalverlauf der Multiplikation der betrachteten Zeitreihe mit einer Rechteckfunktion, die entlang des Auswertungsfensters (Zeitfenster) den Wert 1 annimmt.

Die Erkennung ähnlicher Szenarien innerhalb eines Prozessdatenverlaufs bedarf somit der Suche nach Zeitreihenausschnitten einer Bedeutung und deren zuverlässiger Zuordnung in eine Äquivalenzklasse. Dabei wird das zu erkennende Szenario $Q$ durch den Nutzer im Vorfeld der Szenariensuche definiert, so dass das Mustererkennungssystem auf eine Lernstichprobe zurückgreifen kann. Um nun eine Klassifizierung der zu untersuchenden Zeitreihenausschnitte $C_i$ zu ermöglichen, werden zunächst merkmalsbasierte Kriterien formuliert, mittels derer ein Vergleich zwischen zwei Zeitreihenausschnitten möglich ist und somit eine Aussage über die Zugehörigkeit zu einer gemeinsamen Bedeutungsklasse getroffen werden kann. Dementsprechend bedarf es der Definition einer Ähnlichkeitsfunktion, die ein direktes Maß der Ähnlichkeit zwischen zwei Zeitreihen angibt. Sie kann bspw. über das Intervall [0,1] definiert werden, so dass der Wert 0 der grundsätzlichen Verschiedenheit zweier Zeitreihen entspricht und der Wert 1 zwei Zeitreihen als identisch ausweist. Eine weitere Möglichkeit ist die Definition einer Abstands- bzw. Distanzfunktion, die ein direktes Maß der Verschiedenheit liefert, so dass der Wert 0 der absoluten Übereinstimmung zweier Zeitreihen entspricht und mit einer steigenden Distanz ein wachsender Grad der Verschiedenheit der betrachteten Zeitreihen einhergeht.

Eine in Bezug auf ähnliche Prozessszenarien sehr häufig auftretende zeitliche Störung stellt die lineare Verzerrung der Zeitachse dar. Sie ist meist eine Folge umweltbedingter Schwankungen der Prozessgeschwindigkeit und erschwert durch die lineare Stauchung oder Streckung des charakteristischen Prozessverlaufs die Ähnlichkeitserkennung. Figur 3 zeigt beispielhaft zwei subjektiv ähnliche Füllstandsszenarien (normierter Füllstand F auf der Ordinate über der Zeit aufgetragen) eines Kandidaten C und einer Referenz Q, die allerdings eine lineare zeitliche Verzerrung aufweisen.

Es ist deutlich zu erkennen, dass die globale zeitliche Verzerrung beider Szenarien zu einem signifikanten Euklidischen Abstand führt und somit eine Ähnlichkeit im Euklidischen Sinne ausschließt. Um nun auch die Erkennung derartig ähnlicher Szenarien zu ermöglich, bedarf es folglich einer Ähnlichkeitsfunktion, die invariant gegenüber linearer Skalierungen der zu untersuchenden Szenarien ist und dementsprechend die Klassifikationsgüte maßgeblich steigert. Ausgehend von dem Referenzszenario $Q = (q_1,...q_{mq})$ und dem Kandidatenszenario $C = (c_1,...,c_{mc})$ sowie der typischerweise gültigen Annahme $mq \leq mc$ lässt sich nun, in Anlehnung an die von Yankov et al. in "Detecting Time Series Motifs under Uniform Scaling" (ACM, New York, 2007) vorgestellte Methode, folgender Ansatz formulieren.

Die Einführung des Skalierungsfaktors $l$, $l \geq 1$, ermöglicht die Abbildung des Referenzabtastwerts $q_{mq}$ auf den Kandidatenabtastwert $c_{l \cdot mq}$, was einer Stauchung des Kandidatenszenarios um den Faktor $l$ entspricht. Die Skalierung eines Kandidatenszenarioausschnitts $C = (c_1,...,c_{ms})$ und somit die Generierung eines neuen Kandidatenszenarios $C'$ $= c'_1,...,c'_{mq}$ der Länge $mq$ kann dementsprechend gemäß

$$c'_j = c_{\lceil j \cdot ms/mq \rceil}, \quad 1 \leq j \leq mq \qquad (1)$$

erzielt werden. Dabei ist die Länge $ms$ des zu skalierenden Ausschnitts des Kandidatenszenarios $C$ mit der Einschränkung $ms \leq mc$ frei wählbar und bestimmt in Bezug zu der Referenzlänge $mq$ den angewandten Skalierungsfaktor $l$. Neben dieser einfachen Form der Über- beziehungsweise Unterabtastung ist auch der Einsatz der linearen Interpolation zur Generierung eines skalierten Kandidatenszenarios denkbar.

Die resultierende Ähnlichkeitsfunktion basiert schließlich auf der Skalierung des Kandidatenszenarios $C = (c_1,...,c_{ms})$ variabler Länge $ms$, $\lceil mq/l \rceil \leq ms \leq lm$ und der Berechnung der Euklidischen Distanz $d_{euxl}(C'(mq,ms),Q)$ zwischen der skalierten Sequenz $C'(mq,ms)$ und dem Referenzszenario $Q$ gemäß

$$c'(mq,ms)_i = c(ms)_{\lceil i \cdot ms/mq \rceil}, \quad 1 \leq i \leq mq \qquad (2)$$

$$LS(Q,C) = \frac{1}{\underset{ms}{argmin}} \cdot \min_{ms=\lceil mq/l \rceil}^{\min(\lceil l \cdot mq \rceil, mc)} d_{eukl}(C'(mq,ms),Q). \qquad (3)$$

Wie aus Gleichung 3 hervorgeht, skaliert die Funktion $LS(Q,C)$ das Kandidatenszenario $C$ derart, dass im Sinne des Euklidischen Ähnlichkeitsbegriffs eine maximale Übereinstimmung zur Referenz und somit eine minimale Distanz erzielt wird. Die Einschränkung der oberen Skalierungsschranke durch den Term $\min(\lceil l \cdot mq \rceil, mc)$ begrenzt dabei die maximale Länge des zu skalierenden Kandidatenausschnitts auf die tatsächlich verfügbare Kandidatenlänge mc, so dass die korrekte Funktion des Algorithmus auch bei Skalierungsfaktoren $l$ mit $\lceil l \cdot mq \rceil$ > mc gewährleistet ist. Figur 4 illustriert das Ergebnis der linearen Skalierung anhand der Füllstandsszenarien der Figur 3. Es ist erkennbar, dass sich die Euklidische Distanz unter Verwendung der linearen Skalierung deutlich verringert, so dass nun die Ähnlichkeit der betrachteten zeitlich linear deformierten Szenarien automatisiert detektierbar bzw. ermittelbar ist.

Die mittels der linearen Skalierung gewonnene Invarianz gegenüber linearen zeitlichen Verzerrungen bedingt allerdings einen deutlich höheren Rechenaufwand als die Berechnung der reinen Euklidischen Distanz. Im Hinblick auf eine ökonomische Umsetzung der Erfindung ist daher die Verwendung eines geeigneten Optimierungsansatzes empfehlenswert. Das Ziel ist dabei die Reduktion der auszuführenden Berechnungsschritte beziehungsweise die Minimierung der durchzuführenden linearen Skalierungen, ohne jedoch eine Verringerung der Erkennungsqualität hinnehmen zu müssen. Es ist zu betonen, dass die Erfindung auch ohne diesen Optimierungsansatz durchführbar ist und dieser lediglich zur Einsparung von Rechenzeit eingesetzt wird. Bei Vorhandensein von ausreichender Rechenkapazität kann darauf verzichtet werden.

Eine Umsetzung dieser Forderungen stellt die Einführung der sogenannten Auswertungsschranke der linearen Skalierung $AS_{LS}(Q,C)$ dar. Diese im mathematischen Sinne untere Schranke $LS$ ermöglicht die Abschätzung der mittels der linearen Skalierung errechneten Euklidischen Distanz bei einem deutlich reduzierten Rechenaufwand. Die konsequente Einhaltung der Bedingung $AS_{LS}(Q,C) \leq LS(C,Q)$ garantiert dabei, dass kein Treffer bzw. die Ähnlichkeit zwischen dem aktuell betrachteten Kandidatenszenario und dem Referenzszenario durch die Einführung der Auswertungsschranke $AS_{LS}(Q,C)$ unerkannt bleibt, so dass die Erkennungsleistung durch die Optimierung nicht beeinträchtigt wird.

Die eigentliche Auswertungsschranke $AS_{LS}(Q,C)$ basiert schließlich auf einer Hüllkurve, die durch ihre Maximaeinhüllende $OE = (oe_1,...,oe_{mq})$ und ihre Minimaeinhüllende $UE = (ue_1,...,ue_{mq})$ die im Zuge der linearen Skalierung des Kandidatenszenarios $C$ möglichen Ausprägungen der skalierten Werte vollständig umschließt. Die Einhüllenden sind dementsprechend gemäß

$$oe_i = \max(c_{\lceil i/l \rceil}, \ldots, c_{\lceil il \rceil}) \quad (4)$$

$$ue_i = \min(c_{\lceil i/l \rceil}, \ldots, c_{\lceil il \rceil}) \quad (5)$$

definiert und umschließen, wie Figur 5 veranschaulicht, alle bis zu dem maximalen Skalierungsfaktor $l$ transformierten Versionen des Kandidatenszenarios $C$.

Die Auswertungsschranke $AS_{LS}(Q,C)$ bildet nun den Euklidischen Abstand zwischen dem Referenzszenario $Q$ und der jeweiligen Einhüllenden des Kandidatenszenarios, wobei gemäß

$$AS_{LS}(Q,C) = \sqrt{\sum_{i=1}^{mq} \begin{cases} (q_i - oe_i)^2 & \text{für} \quad q_i > oe_i \\ (q_i - ue_i)^2 & \text{für} \quad q_i < ue_i \\ 0 & \text{sonst} \end{cases}} \quad (6)$$

nur die Abtastwerte des Referenzszenarios $Q$ einen Beitrag leisten, die sich außerhalb der Hüllkurve befinden. Figur 6 veranschaulicht dieses Berechnungsprinzip.

Nach Einführung dieser Auswertungsschranke ist es nun möglich, die lineare Skalierung im Rahmen der Szenariensuche effizient zu nutzen, da ein Großteil der Kandidat-Referenz-Vergleiche bereits durch das Ergebnis der Abschätzung ausgeschlossen wird und somit keine Untersuchung mittels der linearen Skalierung erfordert. Der Ablauf einer solchen Szenarienerkennung ist in Figur 7 illustriert.

Wie aus Figur 7 hervorgeht, kann das erfindungsgemäße Verfahren eine zweistufige Ähnlichkeitsauswertung aufweisen. Zunächst liefert die Berechnung der Auswertungsschranke $AS_{LS}(Q,C)$ eine Ähnlichkeitsabschätzung der betrachteten Szenarien. Unterschreitet dieser Wert den für eine positive Ähnlichkeitsentscheidung hinterlegten Grenzwert $\varepsilon$, so werden die betrachteten Szenarien als möglicherweise ähnlich eingestuft und der nachfolgenden Analyse mittels der linearen Skalierung zugeführt. Das Ergebnis dieser Detailauswertung dient schließlich der Klassifikationsstufe als Grundlage für die finale Ähnlichkeitsentscheidung.

Das Problem der Invarianz der Ähnlichkeitserkennung gegenüber nichtlinearen zeitlichen Verzerrungen ist insbesondere bspw. aus dem Bereich der Spracherkennung bekannt, da die Geschwindigkeit der Aussprache einzelner Laute von Sprecher zu Sprecher variiert und somit eine Stauchung oder Streckung des jeweiligen Lauts zur Folge hat. Diesem Anwendungsbereich entstammt der Ansatz der Dynamischen Zeitverzerrung (engl.: Dynamic Time Warping), deren Funktionsprinzip die zeitliche Normierung in Form einer nichtlinearen Abbildung und die Klassifikation durch Berechnung eines entsprechenden Abstandsmaßes miteinander vereint (vgl. Rabiner et al. in "Fundamentals of Speech Recognition", Prentice Hall PTR, Englewood Cliffs, NJ, 1993).

Die zeitliche Normierung hat die Aufgabe, die einzelnen Musterabschnitte gemäß einer sogenannten Verzerrungsfunktion zu stauchen oder zu strecken und somit eine in zeitlicher Hinsicht optimale Anpassung des Kandidatenszenarios an das Referenzszenario zu erzielen. Die Verzerrungsfunktion bestimmt sich dabei durch einen direkten Vergleich der beiden zu betrachtenden Szenarien, so dass die Distanz zwischen den beiden Zeitreihen durch eine im Sinne des Abstandsmaßes optimale nichtlineare Verzerrung der Zeitachse des Kandidatenszenarios minimiert wird.

In der Praxis kann das Referenzszenario durch einen einzigen Zeitreihenausschnitt definiert werden, so dass eine aufwendige Erstellung eines bestimmten Stichprobenumfangs entfällt. Auf Grund der Abhängigkeit der nichtlinearen Verzerrungsfunktion von der Ausprägung des Kandidatenszenarios sowie des Referenzszenarios muss diese Abbildung für jedes Kandidatenszenario individuell bestimmt werden.

Das aus diesem Verzerrungsprozess resultierende Abstandsmaß, die sogenannte akkumulierte Distanz, dient schließlich als Ähnlichkeitsmerkmal für die finale Klassifikation. Im folgenden sollen zunächst der Kernalgorithmus und weiterführende algorithmische Anpassungen zur Optimierung der Erkennungsgüte vorgestellt werden.

Ausgehend von dem in Figur 4 gezeigten Referenzszenario $Q = (q_1,...q_{mq})$ und dem Kandidatenszenario $C = (c_1,...,c_{mc})$ bildet die Konstruktion einer $(mq,mc)$-Matrix $D_{DTW}$ die Grundlage der zeitlichen Normierung im Zuge der dynamischen Zeitverzerrung (da das in Figur 4 gezeigte Szenario bereits einer Linearen Skalierung unterzogen wurde, entspricht dieses Vorgehen dem beschriebenen Prinzip der Verschachtelung; selbstverständlich kann das Folgende auch auf Prozessdaten angewendet werden, die zuvor keiner Linearen Skalierung unterzogen wurden). Dabei werden das Referenz- sowie das Kandidatenszenario wie in Figur 8 gezeigt entlang der *i*- *j*-Ebene aufgetragen, so dass die einzelnen Matrixelemente $(i, j)$ dem Abstand zwischen den Datenpunkten $q_i$ und $c_j$ entsprechen, dessen Berechnungsvorschrift über ein geeignetes lokales Distanzmaß $d(q_i,c_j)$ definiert ist. Es hat sich gezeigt, dass die quadrierte Euklidische Distanz $d^2_{eukl}(q_i,c_j) = (q_i-c_j)^2$ ein schnell zu berechnendes und zugleich aussagekräftiges Abstandsmaß darstellt und somit (wie im folgenden) zur Berechnung der Distanz zwischen den einzelnen Abtastpunkten herangezogen werden kann.

Gesucht ist nun die nichtlineare Abbildung

$$w(k) = [i(k), j(k)], \quad k = 1,...,mk \qquad (7)$$

welche die akkumulierte Distanz

$$D(Q,C,W) = \sqrt{\sum_{k=1}^{mk} d^2_{eukl}(Q,C,w(k))} \qquad (8)$$

zwischen dem Referenz- und dem Kandidatenszenario minimiert. Sie beschreibt somit die Summe der in den jeweils angrenzenden Matrixelementen abgelegten lokalen Distanzen entlang dem über die Abbildung *w(k)* vorgegebenen Weg durch die Matrix. Dementsprechend bezeichnet man diese Abbildung auch als den Verzerrungspfad $W =$

($w_1,...,w_{mk}$), da dieser eine stetige Zuordnung der einzelnen Abtastpunkte zwischen den Szenarien *Q* und *C* im Sinne einer optimalen zeitlichen Übereinstimmung definiert. Die Länge dieses Verzerrungspfades $mk = |W|$ ist dabei im Intervall

$$\max(mq, mc) \leq mk \leq mq+mc-1 \quad (9)$$

definiert und hängt somit von der zeitlichen Übereinstimmung der zu vergleichenden Szenarienabschnitte bzw. dem notwendigen Verzerrungsaufwand zur Minimierung der akkumulierten Distanz ab. Die derart ermittelte akkumulierte Distanz ist invariant bezüglich nichtlinearer zeitlicher Störungen und stellt somit ein geeignetes Maß zur Bewertung der Ähnlichkeit zwischen den betrachteten Szenarien dar.

Die mittels der dynamischen Zeitverzerrung gewonnene parametrierbare Invarianz gegenüber nichtlinearen Störungen bedingt allerdings einen deutlich gesteigerten numerischen Aufwand im Vergleich zur Berechnung der reinen Euklidischen Distanz, so dass ein Ansatz zur Reduktion der im Zuge der Szenariensuche benötigten Rechenschritte gefunden werden muss, um einen effektiven Einsatz der Methode zu gewährleisten, ohne jedoch eine Verringerung der Erkennungsqualität hinnehmen zu müssen. Eine Lösung hierfür stellt das voranstehend im Zusammenhang mit der Abschätzung der linearen Skalierungsdistanz beschriebene Optimierungsprinzip dar. Figur 9 zeigt die für diese Abschätzung erzeugten Referenzhüllkurven, eine obere Hüllkurve $U_{DTW}(Q)$ und eine untere Hüllkurve $L_{DTW}(Q)$, deren Erzeugung gemäß $l_{DTW,i} = \min(q_{i-[rn]},...,q_{i+[rn]})$ und $U_{DTW,i} = \max(q_{i-[rn]},...,q_{i+[rn]})$ erfolgt. Figur 10 zeigt ein Diagramm, das die Berechnung der Euklidischen Distanz zwischen der Referenzhüllkurve und dem Kandidatenszenario C zeigt. Die Berechnung erfolgt gemäß

$$E_{DTW}(Q,C) = \frac{1}{n}\sqrt{\sum_{i=1}^{n}\begin{cases}(c_i - u_{DTW,i})^2 & \text{für} \quad c_i > u_{DTW,i}\\(c_i - l_{DTW,i})^2 & \text{für} \quad c_i < l_{DTW,i}\\0 & \text{sonst}\end{cases}} \quad (10)$$

Da durch das erfindungsgemäße Vorgehen einer vorgeschalteten Abschätzung die Mehrheit der Ähnlichkeitsvergleiche zwischen Referenz- und Kandidatenszenario bereits beantwortet sind, kann in vielen Fällen auf eine exakte Untersuchung mittels des sogenannten Kernalgorithmus (der Dynamischen Zeitverzerrung) verzichtet werden. Figur 11 zeigt ein Flussdiagramm der dadurch ermöglichten Vorgehensweise der zweistufigen Auswertungsstruktur (analog zu der Darstellung der Figur 7 in Zusammenhang mit der Linearen Skalierung.

Die Auswertungsschranke $AS_{DTW}(Q,C)$ liefert zunächst eine Abschätzung für die exakte Ähnlichkeitsuntersuchung und erlaubt somit auf Grund der Forderung $AS_{DTW}(Q,C) \leq DTW(Q,C)$ einen hinsichtlich der Referenzähnlichkeit sicheren Ausschluss der Szenarien $C_k$, deren abgeschätzte Distanz den vorgegebenen Grenzwert $\varepsilon$ überschreitet. Liefert die aktuelle Abschätzung allerdings einen Wert, der den Grenzwert $\varepsilon$ unterschreitet, dann wird das gerade untersuchte Szenario der exakten Auswertung mittels des Kernalgorithmus zugeführt, um somit eine finale Ähnlichkeitsentscheidung zu ermöglichen.

Die strukturelle Analogie der beiden zuletzt vorgestellten algorithmischen Ansätze zur Lösung des dieser Arbeit zu Grunde liegenden Szenariensuchproblems schafft die Voraussetzung für eine komprimierte Implementierung und ermöglicht somit eine zeitoptimierte Realisierung eines kombinierten Lösungsansatzes bestehend aus beiden Kernalgorithmen, der in der Lage ist sowohl lineare als auch nichtlineare zeitliche Deformationen im Rahmen der Ähnlichkeitssuche zu berücksichtigen.

Figur 12 ist ein Flussdiagramm zur Veranschaulichung eines erfindungsgemäßen Verfahrens zur automatisierten Analyse von Prozessdaten mit paralleler Durchführung einer linearen und einer nichtlinearen Anpassung. Hierzu wird die der eingegebenen Suchabfrage entsprechenden Zeitreihe in dem Analysemodul in Szenarien zerlegt (Auswertungsfenster). Anschließend können die erzeugten bzw. ermittelten Szenarien zur Verbesserung der Erkennungsgüte geglättet und/oder normalisiert werden. Die primäre Auswertung umfasst die separate Abschätzung der Skalierungsdistanzen zum einen gemäß der Linearen Skalierung ($E_{LS}(Q,C)$ bzw. $AS_{LS}(Q,C)$; vgl. Gleichung 6) und zum anderen gemäß der Dynamischen Zeitverzerrung ($E_{DTW}(Q,C)$; vgl. Gleichung 10), wobei die Abschätzung in dem dargestellten Beispiel auf den Rohdaten basiert; alternativ wäre auch eine wie eingangs beschriebene indexbasierte Abschätzung möglich). Die Ergebnisse werden anschließend unter Berücksichtigung des Ähnlichkeitsfaktors $\varepsilon$ klassifiziert und die der Bedingung $E_{LS}(Q,C) \leq \varepsilon$ bzw. $E_{DTW}(Q,C) \leq \varepsilon$ genügenden "Treffer" als primäre Treffer klassifiziert.

Die primären Treffer werden einer exakten Berechnung der Distanz unterzogen, und die daraus erhaltenen Treffer als sekundäre Treffer klassifiziert. Die aus jeder Gruppe erhaltenen sekundären Treffer werden zusammengeführt ("verschmolzen") und gruppiert. Die Auswahl der Treffer kann dabei entweder nach dem UND- oder nach dem ODER-Prinzip erfolgen. Das erhaltene Ergebnis wird als Grafik bzw. Diagramm visualisiert und über die grafische Benutzerschnittstelle ausgegeben.

Figur 13 zeigt den voranstehend beschriebenen Ablauf mit einer indexbasierten anstelle einer rohdatenbasierten Abschätzung in der primären Auswertung.

Es ist erneut zu betonen, dass sich die Primärauswertung förderlich auf das erfindungsgemäße Verfahren auswirkt, dass eine Durchführung der Erfindung bei ausreichender Rechenkapazität ausschließlich im Rahmen der in "Sekundärauswertung" jedoch ebenfalls hervorragende Ergebnisse liefert.

Des weiteren ist wie voranstehend bereits ausgeführt eine Verschachtelung der beiden Skalierungsmethoden möglich, so dass die Treffer der linearen Anpassung im Anschluss einer nichtlinearen Anpassung unterzogen werden, oder umgekehrt.

Die Erfindung ermöglicht eine effiziente Automatisierung der Erkennung von Ähnlichkeitsmustern in Prozessdatensuchzeitreihen. Durch die erfindungsgemäße Verbindung von linearen und nichtlinearen Skalierungsverfahren mit Distanzmaßberechnung wird ein bislang nicht erreichtes Maß an automatisierter Ähnlichkeitserkennung erreicht, die insbesondere in Verbindung mit der beschriebenen Primärauswertung in erstaunlich kurzer Rechenzeit hervorragende Ergebnisse liefert. Die Erfindung kann in allen industriellen Bereichen mit Prozessdatenerfassung, aber auch in der Medizin, der Forschung und Wissenschaft usw. überall dort eingesetzt werden, wo zur Steuerung von Abläufen eine Erkennung von Mustern im Prozessablauf notwendig ist, um basierend auf der Ähnlichkeitserkennung aufgrund von in einer verknüpften Datenbank zugänglichen Historien eine automatisierte Prozesssteuerung bzw. -regelung vornehmen zu können.

## Patentansprüche

1. Verfahren zur automatisierten Analyse von aus einer Reihe von Prozesssignalen bestehenden Prozessdaten (50) durch Identifikation einer Prozessdatensequenz mit einem Zeitreihenmuster, das mit demjenigen einer Referenzdatensequenz (52, Q) ähnlich ist, wobei das Verfahren folgendes umfasst:

   - Durchführen einer Sequenzsuche und Ermitteln einer ähnlichen Prozessdatensequenz (C) durch Vergleich mit mindestens einer Referenzdatensequenz (52, Q),
   - Bewerten der Ähnlichkeit zwischen der ermittelten Prozessdatensequenz (C) und der Referenzdatensequenz (52) durch Minimieren des Abstands zwischen den Signalen der Prozessdatensequenz (C) und der Referenzdatensequenz (52) durch Anpassung der Prozessdatensequenz (C) unter Berücksichtigung linearer und nichtlinearer Zeitachsen, Berechnen des Distanzmaßes zwischen der Prozessdatensequenz und der Referenzdatensequenz und Zuordnen von Abstandsklassifikatoren zu den berechneten Distanzmaßen als Ähnlichkeitsmaßstab mittels einer Schwellwertunterscheidung und Einstufen der Prozessdatensequenz als ähnlich oder unähnlich,
   - Ausgeben der Ähnlichkeitsbewertung über eine Benutzerschnittstelle.

2. Verfahren nach Anspruch 1, wobei dem Bewerten der Ähnlichkeit eine Vorverarbeitung der Prozessdatensequenz (C) durch Filtern und/oder Normieren vorausgeht.

3. Verfahren nach Anspruch 1 oder 2, wobei die Distanzmaßberechnung nach der Linearen Skalierung als lineares Anpassungsverfahren erfolgt.

4. Verfahren nach einem der Ansprüche 1 bis 3, wobei die Distanzmaßberechnung nach der Dynamischen Verzerrung als nichtlineares Anpassungsverfahren erfolgt.

5. Verfahren nach einem der Ansprüche 1 bis 4, wobei die Distanzmaßberechnung getrennt nach einem linearen Anpassungsverfahren und einem nichtlinearen Anpassungsverfahren durchgeführt wird.

6. Verfahren nach einem der Ansprüche 1 bis 4, wobei die Distanzmaßberechnung durch Verschachtelung eines linearen und eines nichtlinearen Anpassungsverfahrens durchgeführt wird.

7. Verfahren nach einem der Ansprüche 1 bis 5, wobei zunächst eine Abschätzung der Distanzmaße erfolgt und lediglich die dabei ermittelten Treffer einer exakten Distanzmaßberechnung unterzogen werden.

**8.** Verfahren nach Anspruch 7, wobei die Abschätzung eine rohdatenbasierte Abschätzung oder eine indexbasierte Abschätzung ist.

**9.** System (10) zur automatisierten Analyse von aus einer Reihe von Prozesssignalen bestehenden Prozessdaten, mit einem Betriebsdateninformationssystem (12) und mindestens einem mit dem Betriebsdateninformationssystem (12) verbundenen Hostrechner (14, 14') mit einer Benutzerschnittstelle und einem zugeordneten Referenzdatenspeicher (34), wobei das Betriebsdateninformationssystem (12) einen Speicher (22) zum Speichern von Prozessdaten und eine Mehrzahl von Erfassungseinrichtungen (16, 18) zum Erfassen von Prozessdaten umfasst und wobei der mindestens eine Hostrechner (14, 14') ein Datenakquisitionsmodul (30) zur Akquise von Prozessdaten über die Erfassungseinrichtungen (16, 18) und von Referenzprozessdaten (52) aus dem Referenzdatenspeicher (34) sowie ein Analysemodul (32) umfasst, das dazu ausgebildet ist, ein Verfahren nach einem der Ansprüche 1 bis 7 auszuführen.

**10.** Computerprogramm mit Programmcodemitteln, um alle Schritte eines Verfahrens nach einem der Ansprüche 1 bis 8 durchzuführen, wenn das Computerprogramm auf einem Computer oder einer entsprechenden Recheneinheit, insbesondere auf einem System zur automatisierten Analyse von Prozessdaten gemäß Anspruch 9, ausgeführt wird.

**11.** Computerprogramm nach Anspruch 10, das auf einem computerlesbaren Datenträger gespeichert ist.

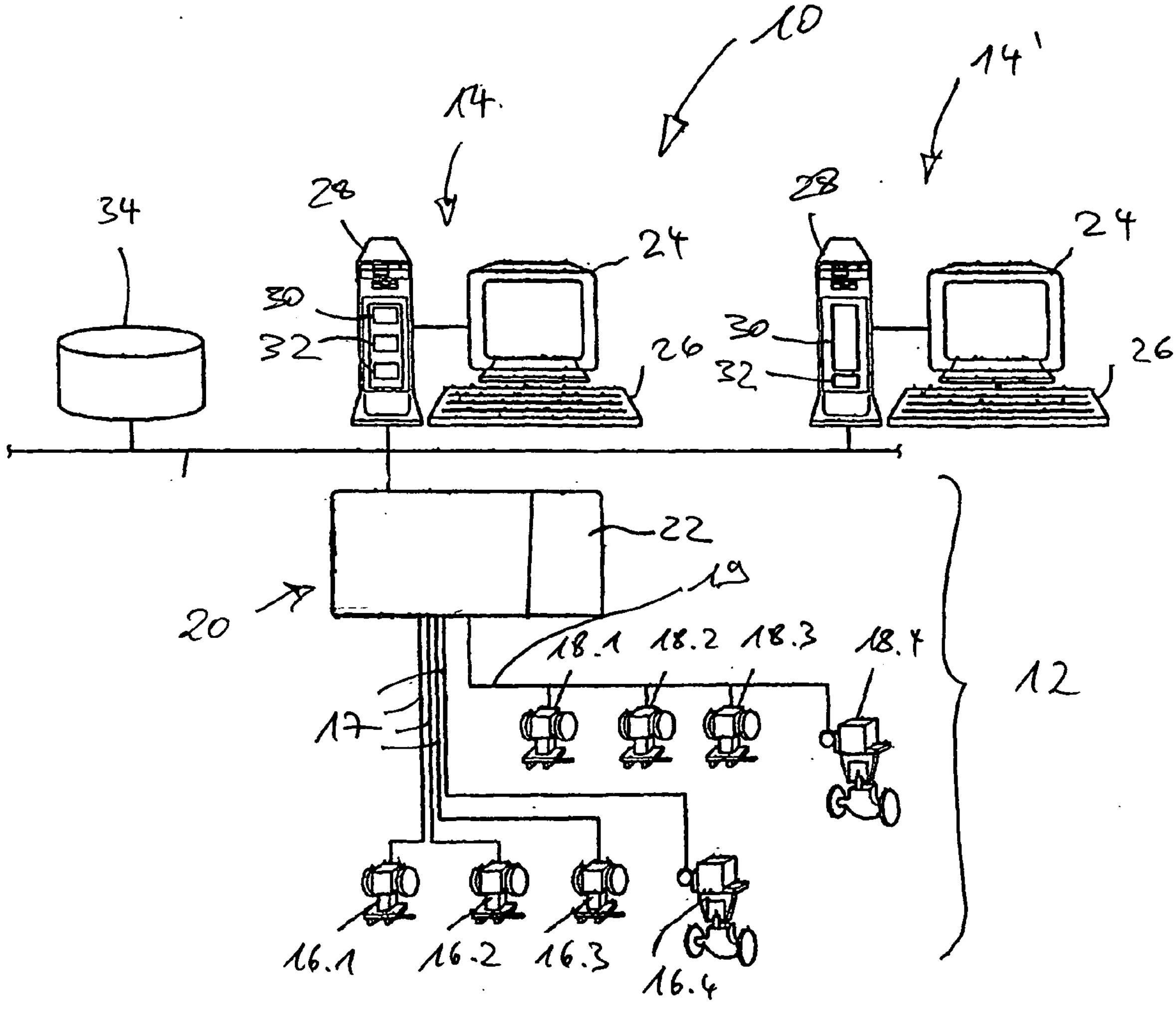
10
14
14'
34
28
30
32
24
26
22
20
19
18.1
18.2
18.3
18.4
17
12
16.1
16.2
16.3
16.4

Fig. 1

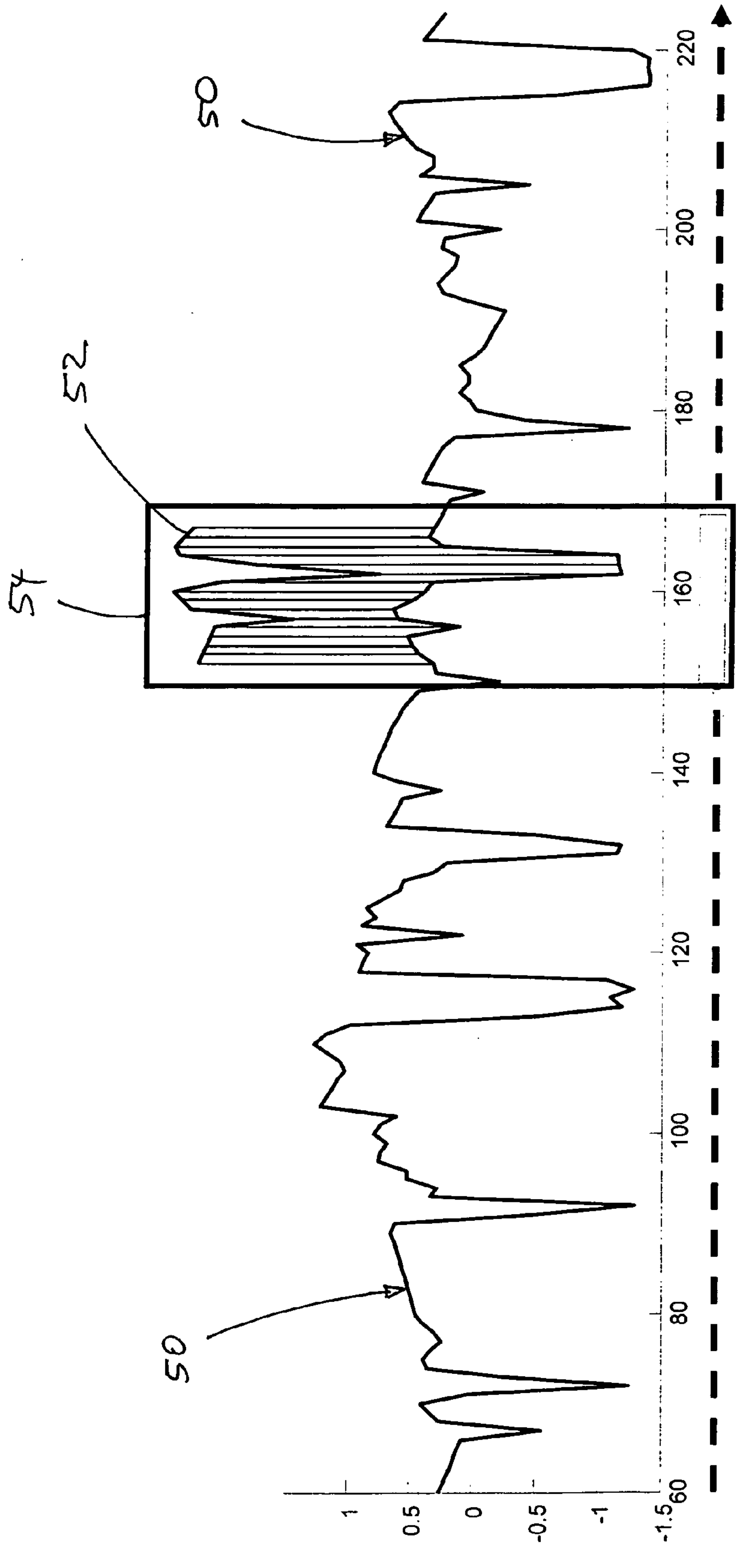


Fig. 2

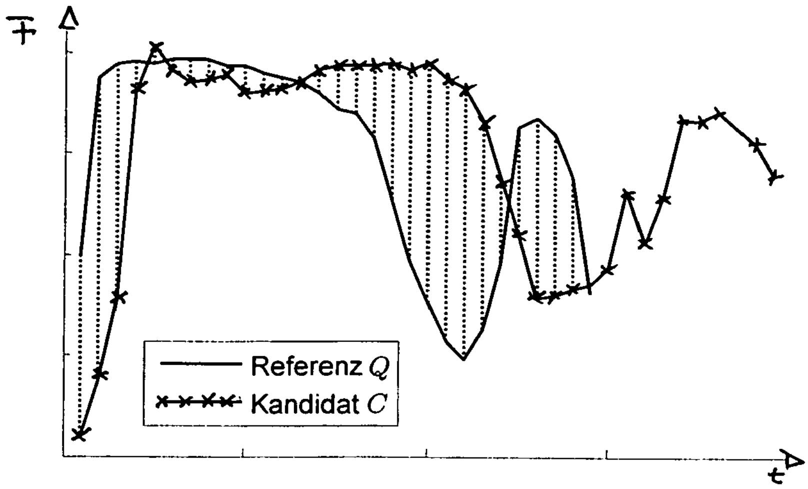


Fig. 3

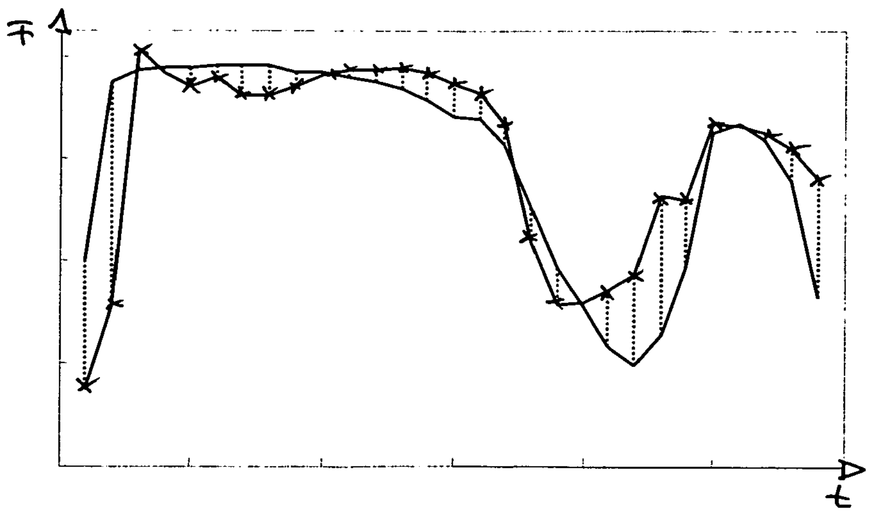


Fig. 4

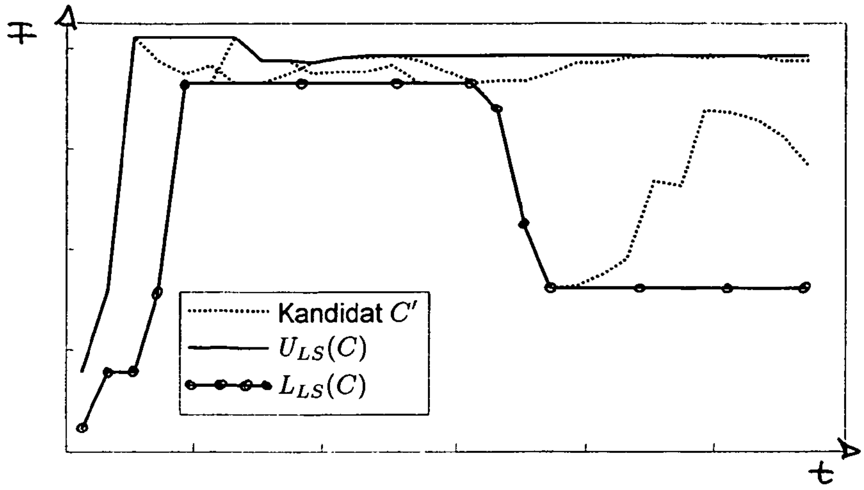


Fig. 5

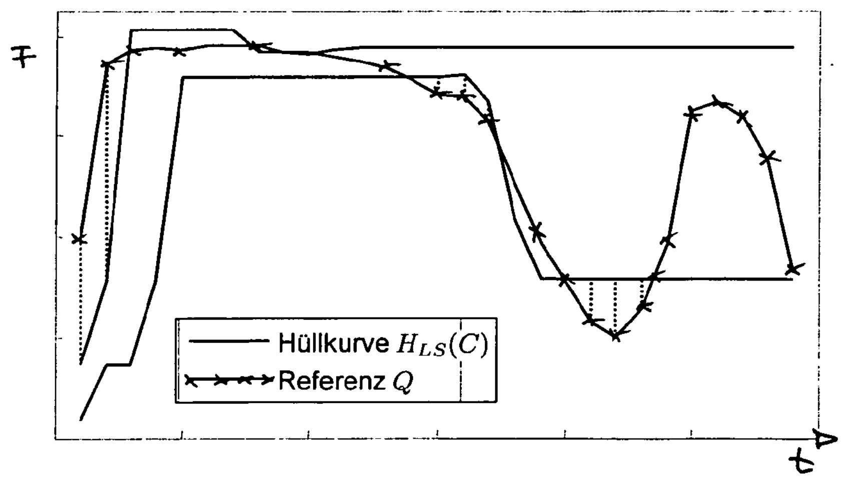


Fig. 6

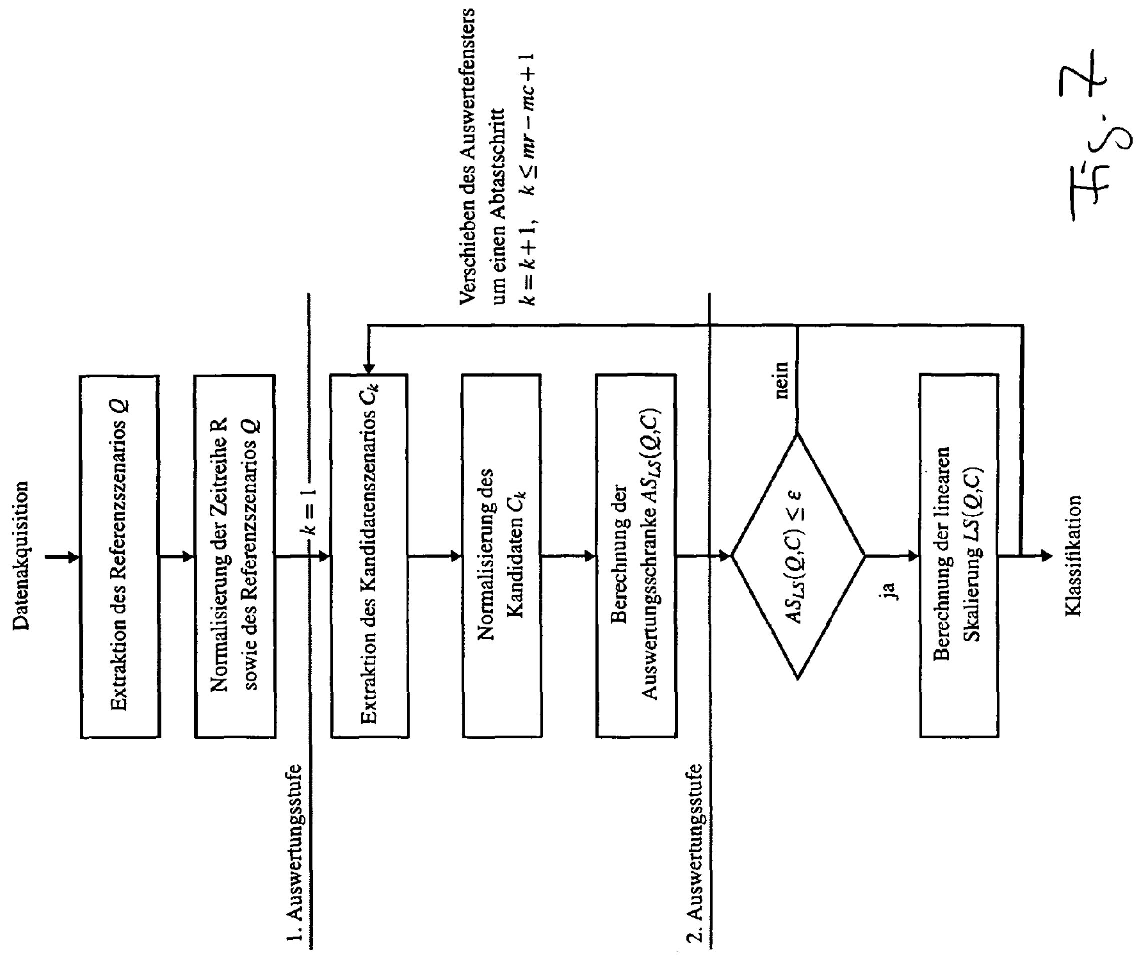
Datenakquisition
Extraktion des Referenzszenarios $Q$
Normalisierung der Zeitreihe R sowie des Referenzszenarios $Q$
$k = 1$
1. Auswertungsstufe
Extraktion des Kandidatenszenarios $C_k$
Normalisierung des Kandidaten $C_k$
Berechnung der Auswertungsschranke $AS_{LS}(Q,C)$
2. Auswertungsstufe
$AS_{LS}(Q,C) \leq \varepsilon$
nein
ja
Berechnung der linearen Skalierung $LS(Q,C)$
Klassifikation
Verschieben des Auswertefensters um einen Abtastschritt
$k = k+1, \quad k \leq mr - mc + 1$

Fig. 7

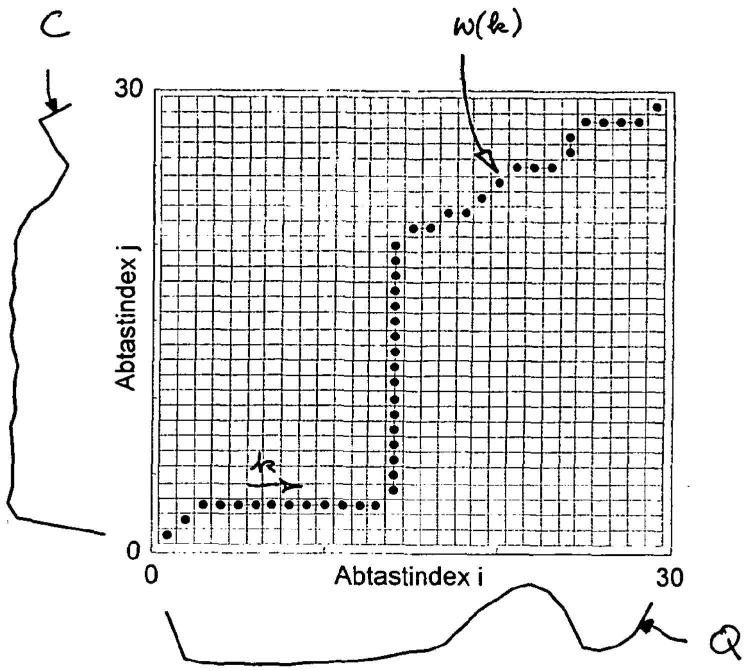
C
w(k)
30
0
0
Abtastindex j
Abtastindex i
30
k
Q

Fig. 8

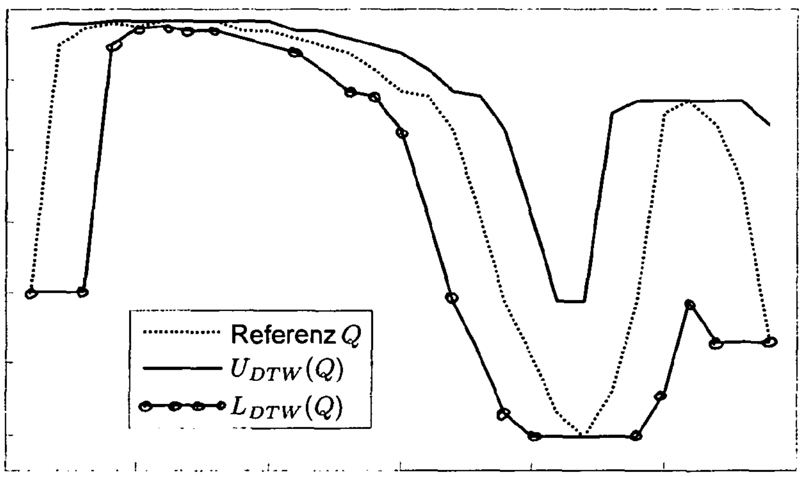
Referenz $Q$
$U_{DTW}(Q)$
$L_{DTW}(Q)$

Fig. 9

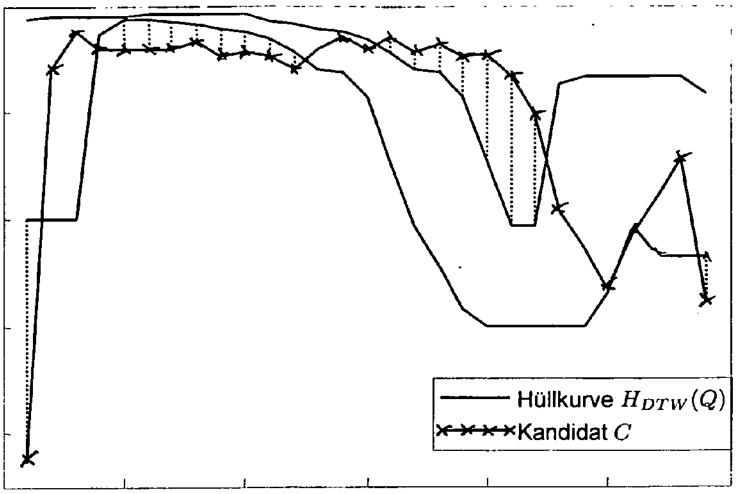
Hüllkurve $H_{DTW}(Q)$
Kandidat $C$

Fig. 10

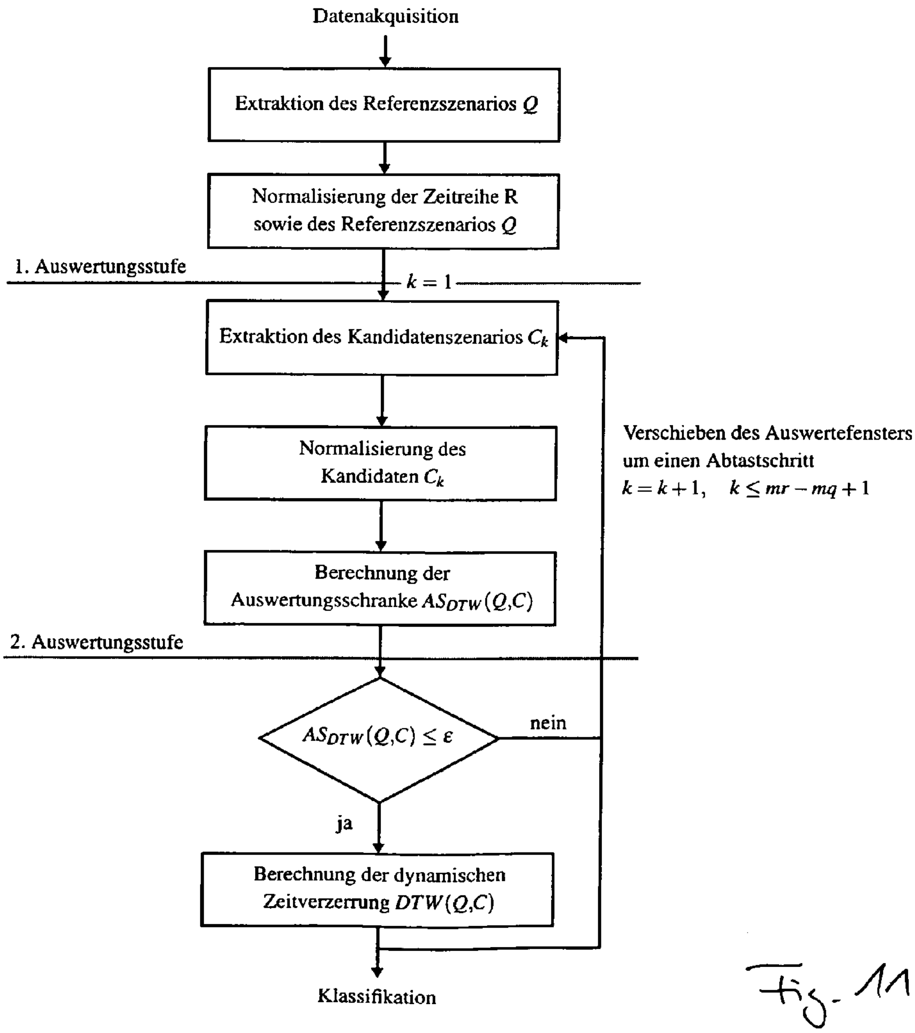
Datenakquisition
Extraktion des Referenzszenarios $Q$
Normalisierung der Zeitreihe R sowie des Referenzszenarios $Q$
1. Auswertungsstufe
$k = 1$
Extraktion des Kandidatenszenarios $C_k$
Normalisierung des Kandidaten $C_k$
Berechnung der Auswertungsschranke $AS_{DTW}(Q,C)$
2. Auswertungsstufe
$AS_{DTW}(Q,C) \leq \varepsilon$
nein
ja
Berechnung der dynamischen Zeitverzerrung $DTW(Q,C)$
Klassifikation
Verschieben des Auswertefensters um einen Abtastschritt
$k = k + 1, \quad k \leq mr - mq + 1$

Fig. 11

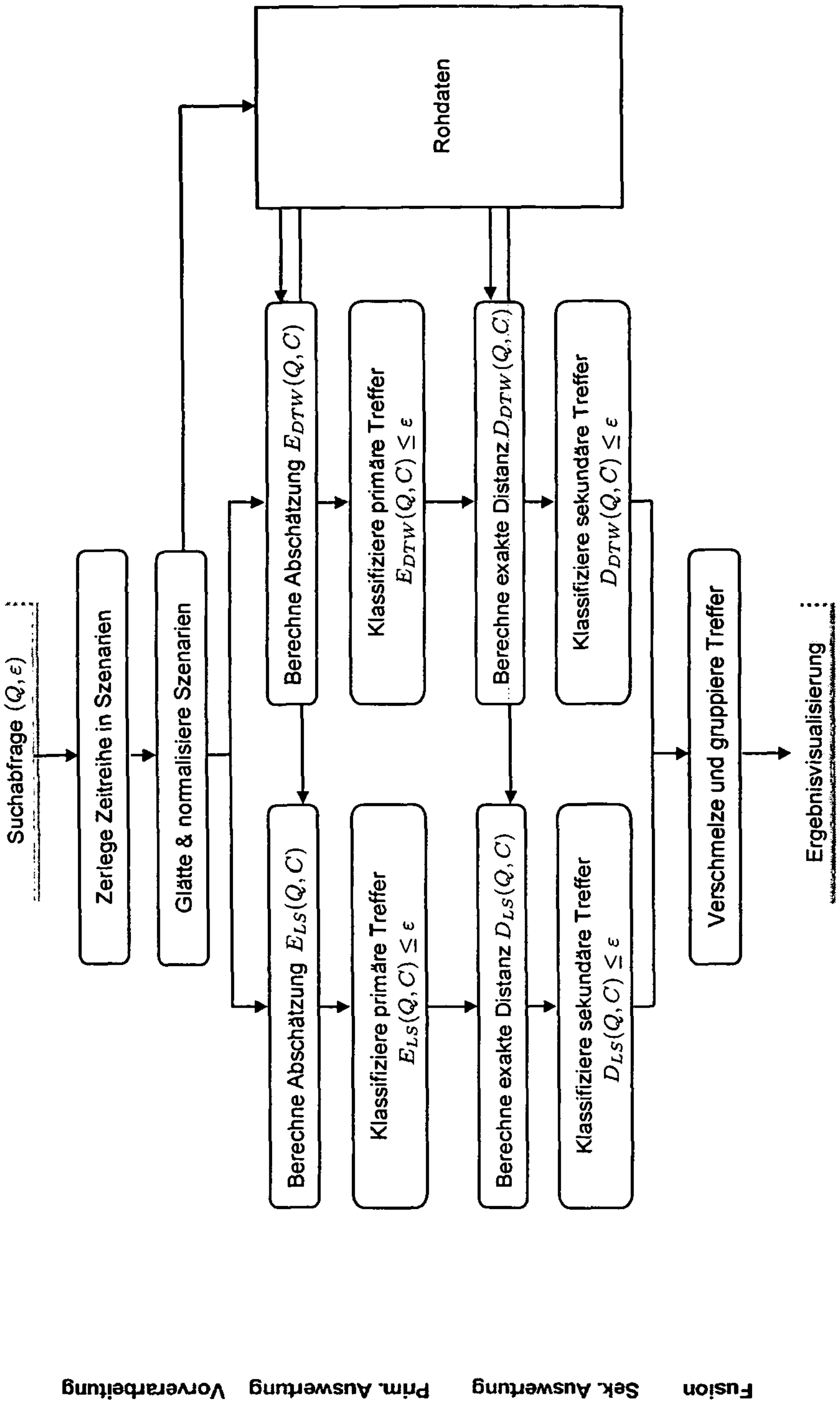
Suchabfrage $(Q, \varepsilon)$
Zerlege Zeitreihe in Szenarien
Glätte & normalisiere Szenarien
Rohdaten
Berechne Abschätzung $E_{DTW}(Q,C)$
Klassifiziere primäre Treffer $E_{DTW}(Q,C) \leq \varepsilon$
Berechne exakte Distanz $D_{DTW}(Q,C)$
Klassifiziere sekundäre Treffer $D_{DTW}(Q,C) \leq \varepsilon$
Berechne Abschätzung $E_{LS}(Q,C)$
Klassifiziere primäre Treffer $E_{LS}(Q,C) \leq \varepsilon$
Berechne exakte Distanz $D_{LS}(Q,C)$
Klassifiziere sekundäre Treffer $D_{LS}(Q,C) \leq \varepsilon$
Verschmelze und gruppiere Treffer
Ergebnisvisualisierung
Vorverarbeitung
Prim. Auswertung
Sek. Auswertung
Fusion

Fig. 12

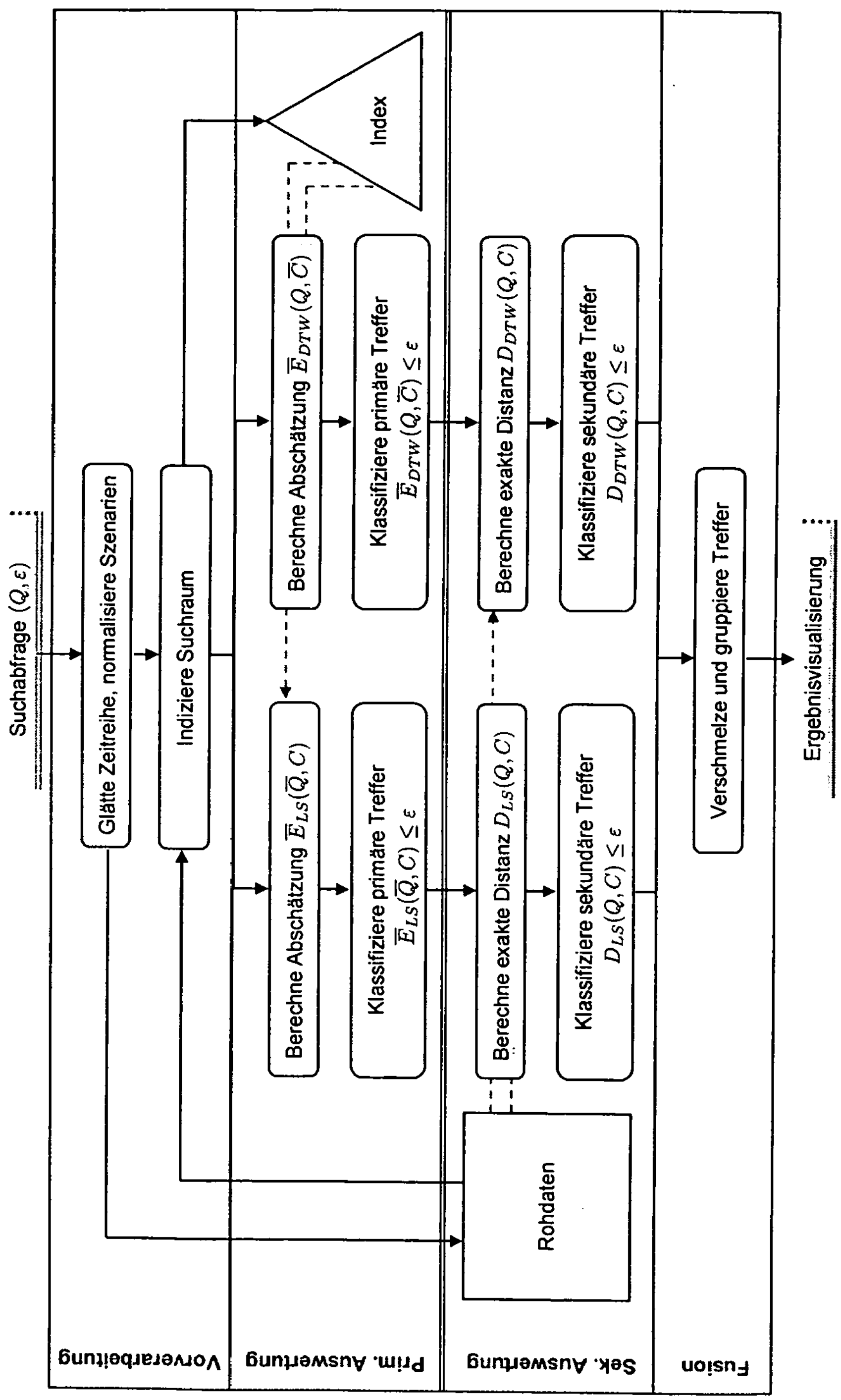
Suchabfrage $(Q,\epsilon)$
Vorverarbeitung
Glätte Zeitreihe, normalisiere Szenarien
Indiziere Suchraum
Prim. Auswertung
Index
Berechne Abschätzung $\overline{E}_{DTW}(Q,\overline{C})$
Klassifiziere primäre Treffer $\overline{E}_{DTW}(Q,\overline{C}) \le \epsilon$
Berechne Abschätzung $\overline{E}_{LS}(\overline{Q},C)$
Klassifiziere primäre Treffer $\overline{E}_{LS}(\overline{Q},C) \le \epsilon$
Sek. Auswertung
Berechne exakte Distanz $D_{DTW}(Q,C)$
Klassifiziere sekundäre Treffer $D_{DTW}(Q,C) \le \epsilon$
Berechne exakte Distanz $D_{LS}(Q,C)$
Klassifiziere sekundäre Treffer $D_{LS}(Q,C) \le \epsilon$
Rohdaten
Fusion
Verschmelze und gruppiere Treffer
Ergebnisvisualisierung

Fig. 13

Europäisches Patentamt
European Patent Office
Office européen des brevets

# EUROPÄISCHER RECHERCHENBERICHT

Nummer der Anmeldung
EP 08 01 7481

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ADA WAI-CHEE FU ET AL: "Scaling and time warping in time series querying" THE VLDB JOURNAL ; THE INTERNATIONAL JOURNAL ON VERY LARGE DATA BASES, SPRINGER, BERLIN, DE, Bd. 17, Nr. 4, 7. März 2007 (2007-03-07), Seiten 899-921, XP019634960 ISSN: 0949-877X * das ganze Dokument * ----- | 1-11 | INV. G05B19/418 |
| A | US 2008/201397 A1 (PENG WEI [US] ET AL) 21. August 2008 (2008-08-21) * das ganze Dokument * ----- | 1-11 | |
| A | ALENCAR A B ET AL: "Similarity-Based Visualization of Time Series Collections: An Application to Analysis of Streamflows" INFORMATION VISUALISATION, 2008. IV '08. 12TH INTERNATIONAL CONFERENCE, IEEE, PISCATAWAY, NJ, USA, 9. Juli 2008 (2008-07-09), Seiten 280-286, XP031290915 ISBN: 978-0-7695-3268-4 * das ganze Dokument * ----- | 1-11 | RECHERCHIERTE SACHGEBIETE (IPC): G05B |

Der vorliegende Recherchenbericht wurde für alle Patentansprüche erstellt

1

| Recherchenort | Abschlußdatum der Recherche | Prüfer |
|---|---|---|
| München | 16. Februar 2009 | Marrone, Fabrizio |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 08 01 7481

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2009

| Im Recherchenbericht angeführtes Patentdokument | Datum der Veröffentlichung | Mitglied(er) der Patentfamilie | Datum der Veröffentlichung |
|---|---|---|---|
| US 2008201397 A1 | 21-08-2008 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102007046964 A1

### In der Beschreibung aufgeführte Nicht-Patentliteratur


- **Yankov et al.** Detecting Time Series Motifs under Uniform Scaling. ACM, 2007
- **Rabiner et al.** Fundamentals of Speech Recognition. Prentice Hall PTR, 1993